# EUROPÄISCHE PATENTSCHRIFT

(11) **EP 2 436 129 B1**
(45) Veröffentlichungstag und Bekanntmachung des Hinweises auf die Patenterteilung: **13.01.2016**
(21) Anmeldenummer: 10710540.5
(22) Anmeldetag: 10.03.2010
(51) Int. Cl.: H04B 17/00, H04B 15/02

(54) **HOCHFREQUENZSIGNALE-FÜHRENDES GERÄT MIT ÄUSSERST GERINGER STÖRSTRAHLUNG**
DEVICE CARRYING RADIO-FREQUENCY SIGNALS WHICH HAS EXTREMELY LOW SPURIOUS RADIATION
APPAREIL DE GUIDAGE DE SIGNAUX À HAUTE FRÉQUENCE, À RAYONNEMENT PARASITE EXTRÊMEMENT RÉDUIT

(30) Priorität: 27.05.2009 DE 102009022760
(43) Veröffentlichungstag der Anmeldung: 04.04.2012
(73) Patentinhaber: Rohde & Schwarz GmbH & Co. KG, 81671 München (DE)
(72) Erfinder: KRAEMER, Wilhelm, 83435 Bad Reichenhall (DE); KRAUS, Wolfgang, 83620 Feldkirchen-Westerham (DE); MARTSCHENKO, Georg, 90762 Fürth (DE); STRECKER, Helmut, 85630 Grasbrunn (DE)
(74) Vertreter: Körfer, Thomas
(86) Internationale Anmeldenummer: PCT/EP2010/001484
(87) Internationale Veröffentlichungsnummer: WO 2010/136089

(56) Entgegenhaltungen:
- EP-A1- 1 727 201
- EP-A1- 1 860 929
- Kuhne electronic GmbH: "Baubeschreibung / Kit DB 6 NT 10GHz Transverter MK2" 1. Juli 2008 (2008-07-01), XP002582793 Gefunden im Internet: URL:http://www.kuhne-electronic.de/userfil es/_pdf/kit-handbuecher/transverter/10ghz/ 10g2.pdf> [gefunden am 2010-05-19]

## Beschreibung

Die Erfindung betrifft ein Hochfrequenzsignale-führendes Gerät, insbesondere ein Mess- und/oder Testgerät, wie z.B. einen Signalgenerator für Hochfrequenz- und Mikrowellensignale, das eine äußerst geringe Störstrahlung abgibt und somit zum Testen von Geräten mit äußerst empfindlichen Empfängern verwendbar ist.

Mikrowellensignalgeneratoren werden beispielsweise zum Testen hochempfindlicher Geräte verwendet für die Signale mit einem Ausgangspegel von z.B. -130 dBm benötigt werden. Beispielsweise werden Mikrowellenempfänger für Satelliten auf ihre Funktion getestet. Diese Mikrowellenempfänger sind sehr empfindlich, da durch den langen Signalweg der Signalpegel der Empfangssignale sehr schwach ist. Zudem ist in einem solchen Mikrowellenempfänger keine Abschirmung vorgesehen, da einerseits im Weltraum kaum mit Umgebungsstörungen zu rechnen ist und andererseits das Gewicht des Satelliten minimal gehalten wird. Mikrowellensignalgeneratoren liefern zwar ein entsprechend schwaches Signal, haben aber das Problem, Störstrahlung in einer ähnlichen Größenordnung abzugeben.

Daher finden Messungen an hochempfindlichen Geräten häufig in elektromagnetisch abgeschirmten Messkammern statt. Solche Messungen sind aufwändig, nicht jeder Zeit verfügbar und teuer. Das zu messende Gerät kann auch nicht immer in eine Messkammer gebracht werden, was z. B. bei einem schon in den Satelliten eingebauten Empfänger der Fall ist.

Eine weitere Möglichkeit besteht darin, die Abschirmung des Mikrowellensignalgenerators zu erhöhen. In der CA 25 033 06 A1 wird ein Schrank für Telekommunikationsbaugruppen elektromagnetisch abgedichtet. Um das Austreten elektromagnetischer Strahlung aus dem Schrank zu verhindern, ist die Innenwand des Schrankes mit Absorbermatten ausgekleidet, die aus Kunststoff bestehen und elektromagnetische Strahlung absorbieren. Da aber Strahlung im Mikrowellenbereich schon durch kleinste Spalte und Ritzen aus dem Gehäuse austreten kann, müssen zusätzlich die einzelnen Baugruppen isoliert bzw. abgeschirmt werden. Für eine besonders gute Abschirmung werden üblicherweise die HochfrequenzBaugruppen eines Signalgenerators in Metallgehäuse, die aus einem Metallblock gefräst sind, untergebracht. Aus mehreren Einzelteilen zusammengesetzte Gehäuse erfüllen nicht die Dichtigkeitsanforderungen, da jeder noch so geringe Spalt bei Frequenzen von bis zu 40 GHz und darüber zu Abstrahlung führt.

Aus einem Metallblock gefräste Metallgehäuse haben den Nachteil, dass sie das Gerät, schwerer und größer machen. Die Herstellung dieser Gehäuse ist mit hohem Zeit- und Materialaufwand und somit mit hohen Kosten behaftet. Außerdem ist die Abschirmung nicht immer ausreichend.

Die EP 1 727 201 A1 zeigt eine andere Art der Abschirmung. Sie verwendet jedoch keine Kontaktstifte auf dem Substrat einer Hochfrequenzbaugruppe, keine Leiterplatte, die über die Kontaktstifte mit mindestens einer Hochfrequenzbaugruppe verbunden ist, und somit auch keine über die Leiterplatte hinausragende Leitungsabschnitte der Kontaktstifte, keine metallische Abdeckung, die die Leiterplatte und die über die Leiterplatte hinausragenden Leitungsabschnitte der Kontaktstifte umgibt, und somit auch keine Durchführungen in der metallischen Abdeckung, die zu den Kontaktstiften versetzt angeordnet sind.

Es ist daher die Aufgabe der Erfindung, ein Hochfrequenzsignale-führendes Gerät, insbesondere ein Mess- und/oder Testgerät mit sehr niedriger Störstrahlung zu schaffen, das einfach montierbar und nach einem Eingriff wieder einfach zusammenbaubar ist. Das Gerät soll dabei nicht schwerer oder größer werden. Abschirmmaßnahmen sollen flexibel an unterschiedlichen Baugruppen anpassbar sein.

Die Aufgabe wird durch das erfindungsgemäße Hochfrequenzsignale-führende Gerät, gemäß Anspruch 1 gelöst. In den Unteransprüchen sind vorteilhafte Weiterbildungen des erfindungsgemäßen Hochfrequenzsignale-führenden Gerätes dargestellt.

Das erfindungsgemäße Hochfrequenzsignale-führende Gerät, umfasst eine Mehrzahl von Hochfrequenzbaugruppen zur Erzeugung von Hochfrequenzsignalen. Zur Verminderung der abgestrahlten Störstrahlung sind zwischen den Hochfrequenzbaugruppen elektromagnetische Strahlung absorbierende Dämpfungsmatten angebracht. Dies hat den Vorteil, dass sich verschiedene im Gerät befindliche Hochfrequenzbaugruppen nicht gegenseitig durch Störstrahlung beeinflussen. Außerdem haben die Dämpfungsmatten wenig Gewicht, sind flexibel formbar und weisen bei zunehmender Frequenz eine steigende Dämpfungseigenschaft auf, sodass beliebig geformte Zwischenräume ausgekleidet werden können ohne dass dies zu einer merklichen Gewichtszunahme führt.

Zur Vereinfachung wird nachfolgend eine elektromagnetische Strahlung absorbierende Dämpfungsmatte lediglich als Dämpfungsmatte bezeichnet.

Des Weiteren sind die Hochfrequenzbaugruppen des erfindungsgemäßen Hochfrequenzsignale-führenden Geräts, insbesondere zumindest teilweise mit einer Dämpfungsmatte ummantelt. Dadurch wird die Störstrahlung bereits nahe der Störungsquelle absorbiert. Eine weitere Ausbreitung und ein Entweichen von Störstrahlung an anderen Undichtigkeitsstellen ist somit unterbunden. Es können herkömmliche Gehäuse, die zwar die EMV-Anforderungen (Anforderungen an die elektromagnetische Verträglichkeit) erfüllen, aber nicht die weit darüber hinausgehenden Dichtheitsanforderungen für hochempfindliche Messungen aufweisen, verwendet werden.

So wird vorteilhafterweise an allen signalführenden oder signalbearbeitenden Baugruppen, wie der Oszillatorbaugruppe, der Filterbaugruppe, dem Frequenzkonverter-Modul, dem Richtkoppler, der Detektorbaugruppe und/oder der Eichleitung eine Dämpfungsmatte angebracht.

Besonders vorteilhaft ist es, dass ein z.B. keramisches Substrat einer Hochfrequenzbaugruppe, auf dem Hochfrequenz-Leitungen, Bauelemente und Kontaktstifte aufgebracht sind, von einem metallischen Gehäuse umschlossen und das metallische Gehäuse mit einer ersten Dämpfungsmatte zumindest teilweise ummantelt ist. Dabei weisen das Gehäuse und die erste Dämpfungsmatte Ausnehmungen auf, durch die die Kontaktstifte hindurchgreifen. Durch die erste Dämpfungsmatte zwischen metallischem Gehäuse und Leiterplatte wird Strahlung, die z.B. vom unteren Teil des Kontaktstiftes ausgesendet wird, abgedämpft.

Desweiteren sind eine Leiterplatte, die mit den Kontaktstiften in Verbindung steht, und die Kontaktstifte, die teilweise über die Leiterplatte hinausragenden, mit einer zweiten Dämpfungsmatte abgedeckt. Die Kontaktstifte verbinden dabei die Leitungen der Hochfrequenzbaugruppe mit einer Leiterplatte, die z.B. eine Logikschaltung zur Ansteuerung der Hochfrequenzbaugruppe trägt. Diese Kontaktstifte und andere Drahtstücke der Schaltung ragen typischerweise einige Millimeter über die Rückseite der Leiterplatte hinaus und können somit eine parasitäre Sendeantenne für Mikrowellen-Störstrahlung bilden. Die auf der Leiterplatte angebrachte zweite Dämpfungsmatte deckt den über die Leiterplatte hinausragenden Teil des Kontaktstiftes ab und absorbiert die von diesem Teil abgestrahlte Störstrahlung.

Ist die Leiterplatte von einer zusätzlichen metallischen Abdeckung umgeben, so sind Durchführungen z.B. für Leitungszuführungen in der metallischen Abdeckung versetzt zu den Kontaktstiften angeordnet. Durch diese Anordnung trifft verbleibende Störstrahlung von den Kontaktstiften auf die metallische Abdeckung und wird absorbiert bzw. reflektiert. Bei übereinander angeordneten Durchführungen können Störstrahlungen auf kürzestem Wege entweichen und stellen ein Strahlungsleck dar.

Vorteilhafterweise ist eine koaxiale Steckerdurchführung am Gehäuse von einer weiteren Dämpfungsmatte umschlossen. Insbesondere die Masse führende äußere Abschirmung der Steckerdurchführung kann einen geringen Kontakt-Widerstand haben. Dies führt zu einer kleinen Spannungsdifferenz und damit zu einem elektrischen Feld bzw. einer Strahlungsquelle. Diese Störstrahlung wird durch die angrenzende absorbierende Schaumstoffmatte absorbiert.

Ausführungsbeispiele des erfindungsgemäßen Hochfrequenzsignale-führenden Geräts, insbesondere eines Mess- und/oder Testgeräts sind in den Zeichnungen beispielhaft dargestellt und werden anhand der nachfolgenden Beschreibung näher erläutert. Es zeigen:
- Fig. 1: ein Blockschaltbild eines Ausführungsbeispiels des erfindungsgemäßen Hochfrequenzsignale-führenden Geräts;
- Fig. 2: ein Ersatzschaltbild einer typischen Steckerdurchführung und
- Fig. 3: ein Ausführungsbeispiel einer erfindungsgemäß abgeschirmten Hochfrequenzbaugruppe in Seitenansicht.

Einander entsprechende Teile sind in allen Figuren mit den gleichen Bezugszeichen versehen und werden daher nicht wiederholt beschrieben.

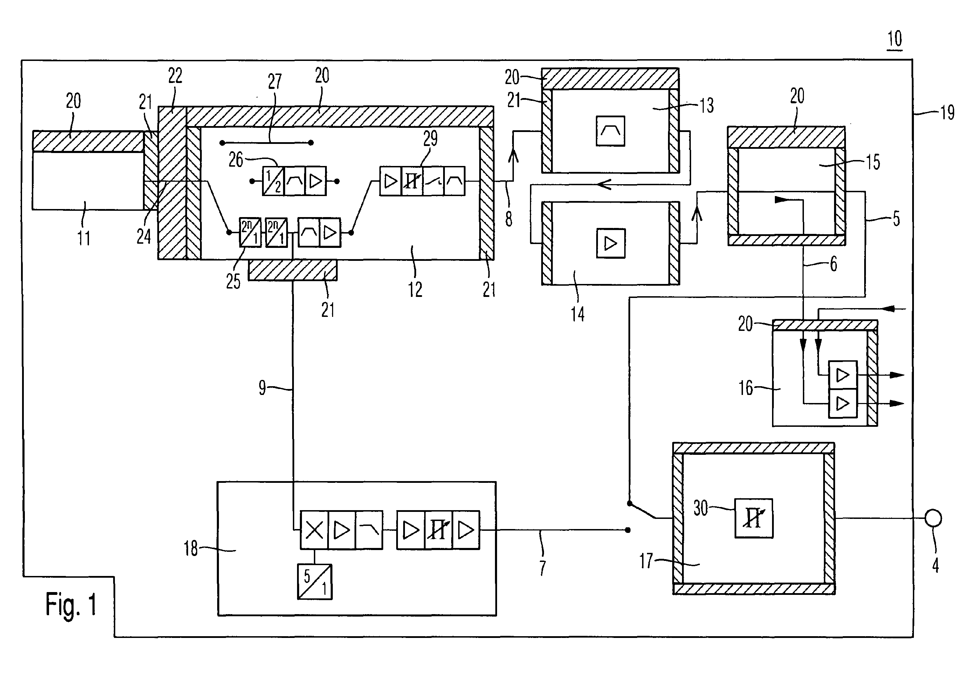

Fig. 1 zeigt eine schematische Darstellung eines erfindungsgemäßen Hochfrequenzsignale-führenden Geräts, insbesondere eines Mess- und/oder Testgeräts am Beispiel eines Signalgenerators 10, der Signale in einem Frequenzbereich von 100 kHz bis ca. 44 GHz erzeugt. Ein durchstimmbarer Mikrowellenoszillator in einer Oszillatorbaugruppe 11 erzeugt Signale in einem Frequenzbereich von 3 GHz bis 11 GHz. Diese Mikrowellensignale werden über ein Koaxialkabel 24 an ein Frequenzkonverter-Modul 12 weitergeleitet. Die Mikrowellensignale werden wahlweise an eine Frequenzteilerstufe 25, eine Frequenzverdopplerstufe 26 oder eine Durchgangsleitung 27 weitergegeben und entsprechend geteilt bzw. verdoppelt und gefiltert oder transparent weitergeleitet. Anschließend verstärkt und filtert die Verstärkerstufe 29 die Mikrowellensignale. Die resultierenden hochfrequenten Ausgangssignale 8 des Frequenzkonverter-Moduls 12 erstrecken sich somit über einen Frequenzbereich von 1 GHz bis 22 GHz.

Zur Erzeugung des niederfrequenten Signalbereichs wird an der Frequenzteilerstufe 25 ein Signal 9 zur Niederfrequenzbaugruppe 18 hin ausgekoppelt. Dort wird das Signal 9 mit einem 5 zu 1 geteilten Seitensignal gemischt und verstärkt, sodass ein niederfrequentes Ausgangssignal 7 von 100 kHz bis 1 GHz erzeugt wird.

Die hochfrequenten Signale 8 aus dem Frequenzkonverter-Modul 12 werden an eine Filterbaugruppe 13, einen Verstärker 14 und eine nicht dargestellte Frequenzdoppler-Baugruppe weitergegeben und von dort in einen Richtkoppler 15 eingespeist, der Signale 6 zu einem Detektor 16 hin auskoppelt. Die nicht ausgekoppelten Signale 5 werden zusammen mit den niederfrequenten Signalen 7 der Niederfrequenzbaugruppe 18 an eine Eichleitung 17 weitergegeben. In der Eichleitung wird der von einem Anwender am Signalgenerator 10 ausgewählte Signalpegel durch einen Stufenabschwächer 30 exakt eingestellt und an den Ausgang 4 des Signalgenerators ausgegeben.

Die Signale werden zwischen den einzelnen Baugruppen 11, 12, 13, 14, 15, 16, 17, 18 über Koaxialkabel 24 übertragen und mittels koaxialen Steckerdurchführungen aus bzw. in die einzelnen Baugruppen 11, 12, 13, 14, 15, 16, 17, 18 geführt.

Alle diese Baugruppen 11, 12, 13, 14, 15, 16, 17, 18 emittieren einen gewissen Anteil der Signale als Störstrahlung. Insbesondere die Mikrowellenstrahlung der Hochfrequenzkomponenten 11, 12, 13, 14, 15, 16, 17 kann durch kleinste Spalte aus einem, die Baugruppe umgebenden Gehäuse, austreten. Um eine Wechselwirkung der einzelnen Hochfrequenzbaugruppen mit dieser Störstrahlung und vor allem eine Abstrahlung nach außen zu verhindern, sind Dämpfungsmatten 22, die elektromagnetische Strahlung absorbieren, in die Zwischenräume zwischen den Baugruppen eingelegt. Eine solche Dämpfungsmatte 22 ist in Fig. 1 beispielhaft zwischen der Oszillatorbaugruppe 11 und dem Frequenzkonverter-Modul 12 eingezeichnet. Insbesondere zwischen Baugruppen wie der Eichleitung, bei denen nur sehr geringe Abweichungen von ihrem Sollwert erlaubt sind, und Nachbarbaugruppen werden Dämpfungsmatten eingelegt. Lediglich Bereiche, die zur Ableitung der Kühlluft benötigt werden, sind ausgespart. Geeignete Dämpfungsmatten sind z.B. von der Firma EMERSON and CUMING MICROWAVE PRODUCTS unter dem Produktnamen ECCOSORB LS-26 erhältlich.

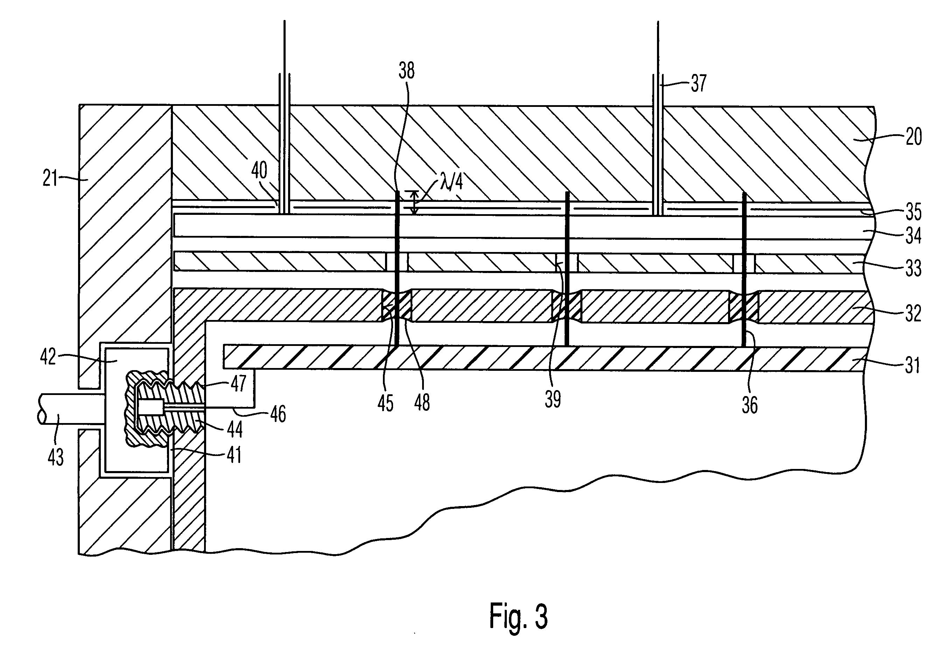

Um einen solchen beschriebenen Signalgenerator für Messungen an hochempfindlichen Empfängern zu verwenden, reicht es nicht aus, Dämpfungsmatten 22 zwischen die beschriebenen Hochfrequenzbaugruppe 11, 12, 13, 14, 15, 16, 17 einzubringen und/oder das Außengehäuse mit den Dämpfungsmatten auszulegen. Insbesondere ragen meist Kontaktstifte 36, die von einem Substrat 31 einer Hochfrequenzschaltung durch ein Abschirmgehäuse 32 eine Leiterplatte 33 kontaktieren, über diese Leiterplatte 34 geringfügig hinaus und wirken somit als parasitäre Mikrowellenantennen (siehe dazu auch Fig.3). Daher sind die Leiterplatten durch zusätzliche Dämpfungsmatten 20 abgedeckt. Diese Dämpfungsmatten 20 an Leiterplatten sind insbesondere bei der Oszillatorbaugruppe 11, beim Frequenzkonverter-Modul 12 und der Filterbaugruppe 13 dargestellt. Der Richtkoppler 15 und die Eichleitung 17 sind nahezu vollständig mit einer absorbierenden Dämpfungsmatte ummantelt. Diese Ausgestaltung der Dämpfungsmatten ist nur beispielhaft zu verstehen und kann an die tatsächlichen Bedürfnisse angepasst werden.

Eine weitere Quelle für Störstrahlung sind Durchführungen für den Anschluss von Koaxialsteckern an den Hochfrequenzbaugruppen 11, 12, 13, 14, 15, 16, 17. Um diese Störstrahlung ursprungsnah abzudämpfen, werden Dämpfungsmatten 21 um diese Steckerdurchführungen angelegt.

Da die genannten Dämpfungsmatten 20, 21, 22 im Mikrowellenbereich eine sehr hohe Dämpfungskonstante aufweisen, kann Störstrahlung weder zu den benachbarten Hochfrequenzbaugruppen gelangen noch durch das Außengehäuse hindurch an einem zu messenden Gerät DUT (Device under Test). Als Ergänzung zu üblichen Abschirmmethoden mit Gehäusen aus einem ausgefrästen Metallblock stellt das Auslegen mit Dämpfungsmatten eine einfache Abschirmmöglichkeit dar. Die Matten sind leicht und flexibel verformbar und können zur Abschirmung beliebig geformte Baugruppen verwendet werden.

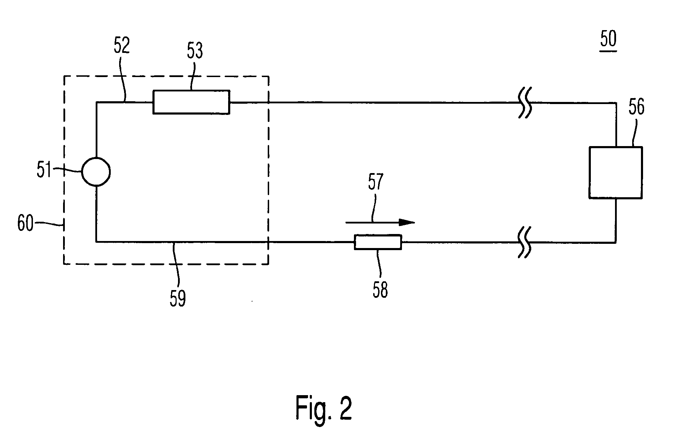

In Fig. 2 ist ein Ersatzschaltbild 50 für eine koaxiale Steckerdurchführung 44 dargestellt. Ein Signal einer Signalquelle 51 wird mit einem Pol an den Innenleiter 52 der Koaxialleitung eingespeist. Als Masseanschluss dient der Außenleiter 59. Die Anschluss-Impedanz 53, die Signalquelle 51 und Teile des Außen- 59 und Innenleiters 52 liegen innerhalb des Gehäuses 60 einer Hochfrequenzbaugruppe 11, 12, 13, 14, 15, 16, 17. Dies ist durch den gestrichelten Bereich 60 angedeutet. Die Signalsenke hat die Abschlussimpedanz 56.

Der Außenleiter 59 hat eine Restimpedanz 58, an der es zu einem Spannungsabfall und damit zu einem elektrischen Feld 57 kommt. Dadurch wird eine elektrische Strahlung vom Außenleiter an die Umgebung abgegeben. Diese Störstrahlung wird durch die Dämpfungsmatten 21 aus Fig. 1 bzw. Fig. 3 absorbiert.

In Fig. 3 ist eine Seitenansicht einer Hochfrequenzbaugruppe 11, 12, 13, 14, 15, 16, 17 mit einer erfindungsgemäßen Abschirmung dargestellt. Auf dem Substrat 31, z.B. einem Keramiksubstrat, sind Hochfrequenzschaltungen z.B. in Streifenleitertechnik aufgebracht. Über Kontaktstifte 36 ist eine Leiterplatte 34, die z.B. Logikschaltungen zur Ansteuerung der Hochfrequenzbaugruppe 11, 12, 13, 14, 15, 16, 17 trägt, kontaktiert. Das Substrat 31 ist von einem metallisches Abschirmgehäuse 32 umgeben. Dabei werden die Kontaktstifte 36 durch kleine Ausnehmungen 45 in Abschirmgehäuse 32 hindurchgeführt, die durch Kunststofffüllungen 48 verfüllt sein können. Aus diesen Ausnehmungen 45 austretende Störstrahlung wird durch eine erste Dämpfungsmatte 33 absorbiert. Diese erste Dämpfungsmatte 33 ist mit kleinen Löchern bzw. Ausnehmungen 39 versehen, durch die die Kontaktstifte 36 hindurchtreten.

Die Kontaktstifte 36 kontaktieren nun die Leiterplatte 34, ragen aber wie auch andere Drahtstücke der Schaltung zumeist etwas über Rückseite der Leiterplatte 34 hinaus. Die Länge 38 des über die Rückseite der Leiterplatte 34 hinausragenden Kontaktstiftes kann im ungünstigen Fall in etwa einer Viertel Wellenlänge der in der Baugruppe geführten Mikrowellenstrahlung entsprechen. Bei einer Frequenz von 44 GHz beträgt ¼ der Wellenlänge etwa 1,7 mm. Der Kontaktstift 36 stellt daher eine gute parasitäre Antenne dar, die Strahlung aus dem Inneren des Gehäuses 32 nach außen trägt. Um diese Strahlung zu eliminieren wird auf der Rückseite der Leiterplatte 34 eine zweite Dämpfungsmatte 20 aufgebracht.

Vorteilhaft wird die Leiterplatte 34 durch eine zusätzliche metallische Abdeckung 35 geschützt. Zur Optimierung der Abschirmung werden Zuführungen 37 z.B. zur Spannungsversorgung der Leiterplatte 34 versetzt zu den Durchführungen der Kontaktstifte 36 angeordnet. Über die Kontaktstifte 36 emittierte Störstrahlung trifft somit auf die metallische Abdeckung 35 bzw. die darüber liegende zweite Dämpfungsmatte 20 und wird dort absorbiert. Bei übereinander angeordneten Durchführungen zur Spannungsversorgung 37 und Kontaktstiften 36 könnte die Störstrahlung über diese Durchführungen entweichen.

Fig. 3 zeigt ebenfalls die Steckerdurchführung 44 der Hochfrequenzbaugruppe 11, 12, 13, 14, 15, 16, 17 zum Anschließen z.B. eines Koaxialkabels 43. Das Nutzsignal wird vom Substrat an den Innenleiter 46 einer koaxialen Steckerdurchführung 44 gegeben. Der Außenleiter 47 der koaxialen Steckerdurchführung 44 ist mit dem metallischen Gehäuse 32 verbunden. Die Überwurfmutter 42 schließt oftmals den Außenleiter 47 der Steckerdurchführung 44 nicht komplett ab, sodass über einen so entstandenen Spalt 41 Störstrahlung austreten kann. Durch eine um diese Durchführung angebrachte Dämpfungsmatte 21 wird die Störstrahlung sofort absorbiert.

Alle beschriebenen und/oder gezeichneten Merkmale können im Rahmen der Erfindung vorteilhaft miteinander kombiniert werden. Die Erfindung ist nicht auf das beschriebene Ausführungsbeispiel beschränkt.

## Patentansprüche

1. Hochfrequenzsignale-führendes Gerät umfassend eine Mehrzahl von Hochfrequenzbaugruppen (11, 12, 13, 14, 15, 16, 17) zur Erzeugung und/oder Verarbeitung von Hochfrequenzsignalen, wobei zur Verminderung der abgestrahlten Störstrahlung zwischen den Hochfrequenzbaugruppen (11, 12, 13, 14, 15, 16, 17) elektromagnetische Strahlung absorbierende Dämpfungsmatten (20, 21, 22) angebracht sind,
**dadurch gekennzeichnet,**
**dass** auf einem Substrat (31) zumindest einer Hochfrequenzbaugruppe (11, 12, 13, 14, 15, 16, 17) Kontaktstifte (36) aufgebracht sind, die mit einer im Hochfrequenzsignale-führenden Gerät enthaltenen Leiterplatte (34) in Verbindung stehen,
**dass** die Leiterplatte (34) und eventuell über die Leiterplatte (34) hinausragende Leitungsabschnitte (38) der Kontaktstifte (36) von einer metallischen Abdeckung (35) umgeben sind und
**dass** Zuführungen (37) in der metallischen Abdeckung (35) versetzt zu den Kontaktstiften (36) angeordnet sind.

2. Hochfrequenzsignale-führendes Gerät nach Anspruch 1,
**dadurch gekennzeichnet,**
die Hochfrequenzbaugruppen zumindest teilweise mit einer Dämpfungsmatte (20, 21) ummantelt sind.

3. Hochfrequenzsignale-führendes Gerät nach Anspruch 1 oder 2,
**dadurch gekennzeichnet,**
**dass** an einer Oszillatorbaugruppe (11) und/oder an einem Frequenzkonverter-Modul (12) und/oder an einer Filterbaugruppe (13) und/oder an einem Richtkoppler (15) und/oder an einer Detektorbaugruppe (16) und/oder an einer dämpfenden Eichleitung (17) eine Dämpfungsmatte (20, 21) angebracht ist.

4. Hochfrequenzsignale-führendes Gerät nach Anspruch 1 oder 2,
**dadurch gekennzeichnet,**
**dass** das Substrat (31) zumindest einer Hochfrequenzbaugruppe (11, 12, 13, 14, 15, 16, 17), auf der Hochfrequenz-Leitungen und Kontaktstifte (36) aufgebracht sind, von einem metallischen Gehäuse (32) umschlossen ist und das metallische Gehäuse (32) mit einer ersten Dämpfungsmatte (33) zumindest teilweise abgedeckt ist.

5. Hochfrequenzsignale-führendes Gerät nach Anspruch 4,
**dadurch gekennzeichnet,**
**dass** die erste Dämpfungsmatte (33) Ausnehmungen (39) aufweist, durch welche die Kontaktstifte (36) hindurchgreifen.

6. Hochfrequenzsignale-führendes Gerät nach einem der Ansprüche 1 bis 5,
**dadurch gekennzeichnet,**
**dass** eine Leiterplatte (34) mit den Kontaktstiften (36) in Verbindung steht und die Leiterplatte(34) sowie die eventuell über die Leiterplatte (34) hinausragenden Leitungsabschnitte (38) der Kontaktstifte (36) mit einer absorbierenden zweiten Dämpfungsmatte (20) abgedeckt sind.

7. Hochfrequenzsignale-führendes Gerät nach Anspruch 6,
**dadurch gekennzeichnet,**
**dass** die Leiterplatte (34) außerhalb des metallischen Gehäuses (32) angebracht ist.

8. Hochfrequenzsignale-führendes Gerät nach Anspruch 6 oder 7,
**dadurch gekennzeichnet,**
**dass** die Leiterplatte (34) eine Logikschaltung zur Ansteuerung der Hochfrequenzbaugruppe enthält.

9. Hochfrequenzsignale-führendes Gerät nach Anspruch 5,
**dadurch gekennzeichnet,**
**dass** die Leiterplatte (34) von einer metallischen Abdeckung (35) umgeben ist und Durchführungen (40) in der metallischen Abdeckung (35) versetzt zu den Kontaktstiften (36) angeordnet sind.

10. Hochfrequenzsignale-führendes Gerät nach Anspruch 1 bis 9,
**dadurch gekennzeichnet,**
**dass** eine koaxiale Steckerdurchführung (44) am Gehäuse (32) von einer zweiten absorbierenden Dämpfungsmatte (21) umschlossen ist.

## Claims

1. Device carrying high-frequency signals comprising a plurality of high-frequency assemblies (11, 12, 13, 14, 15, 16, 17) for generation and/or processing of high-frequency signals, wherein damping mats (20, 21, 22) which absorb electromagnetic radiation are fitted between the high-frequency assemblies (11, 12, 13, 14, 15, 16, 17) to reduce the spurious radiation emitted,
**characterised in that**
contact pins (36) which are in connection with a printed circuit board (34) contained in the device carrying high-frequency signals are fitted on a substrate (31) of at least one high-frequency assembly (11, 12, 13, 14, 15, 16, 17),
**in that** the printed circuit board (34) and any line sections (38) of the contact pins (36) projecting beyond the printed circuit board (34) are surrounded by a metallic cover (35), and
**in that** leads (37) are arranged in the metallic cover (35) offset in relation to the contact pins (36).

2. Device carrying high-frequency signals according to claim 1,
**characterised in that**
the high-frequency assemblies are at least partially enclosed with a damping mat (20, 21).

3. Device carrying high-frequency signals according to claim 1 or 2,
**characterised in that**
a damping mat (20, 21) is fitted to an oscilloscope assembly (11) and/or to a frequency-converter module (12) and/or to a filter assembly (13) and/or to a directional coupler (15) and/or to a detector assembly (16) and/or to a damping calibrating line (17).

4. Device carrying high-frequency signals according to claim 1 or 2,
**characterised in that**
the substrate (31) of at least one high-frequency assembly (11, 12, 13, 14, 15, 16, 17) on which high-frequency lines and contact pins (36) are fitted is surrounded by a metallic housing (32), and the metallic housing (32) is at least partially covered with a first damping mat (33).

5. Device carrying high-frequency signals according to claim 4,
**characterised in that**
the first damping mat (33) exhibits openings (39) through which the contact pins (36) engage.

6. Device carrying high-frequency signals according to one of claims 1 to 5,
**characterised in that**
a printed circuit board (34) is in connection with the contact pins (36), and the printed circuit board (34) and any line sections (38) of the contact pins (36) projecting beyond the printed circuit board (34) are covered with an absorbent second damping mat (20).

7. Device carrying high-frequency signals according to claim 6,
**characterised in that**
the printed circuit board (34) is fitted outside the metallic housing (32).

8. Device carrying high-frequency signals according to claim 6 or 7,
**characterised in that**
the printed circuit board (34) comprises a logic circuit for actuation of the high-frequency assembly.

9. Device carrying high-frequency signals according to claim 5,
**characterised in that**
the printed circuit board (34) is surrounded by a metallic cover (35) and lead-throughs (40) are arranged in the metallic cover (35) offset in relation to the contact pins (36).

10. Device carrying high-frequency signals according to claims 1 to 9,
**characterised in that**
a coaxial connector lead-through (44) on the housing (32) is surrounded by a second absorbent damping mat (21).

## Revendications

1. Appareil de guidage de signaux haute fréquence comportant une pluralité de éléments haute fréquence (11, 12, 13, 14, 15, 16, 17) pour générer et/ou traiter des signaux haute fréquence, dans lequel des tapis d'amortissement absorbant le rayonnement électromagnétique (20, 21, 22) sont disposés entre des éléments haute fréquence (11, 12, 13, 14, 15, 16, 17) en vue de la diminution du rayonnement parasite rayonné,
**caractérisé en ce que**
des broches de contact (36), qui sont reliées à une carte de circuits imprimés (34) contenue dans l'appareil de guidage de signaux haute fréquence, sont disposées sur un substrat (31) d'au moins un élément haute fréquence (11, 12, 13, 14, 15, 16, 17),
**en ce que** la carte de circuits imprimés (34) et éventuellement les tronçons conducteurs (38) des broches de contact (36) saillant au-dessus de la carte de circuits imprimés (34) sont entourés d'un revêtement métallique (35) et
**en ce que** des amenées (37) sont disposées dans le revêtement métallique (35) décalées par rapport aux broches de contact (36).

2. Appareil de guidage de signaux haute fréquence selon la revendication 1, **caractérisé en ce que**
les éléments haute fréquence sont entourés au moins partiellement d'un tapis d'amortissement (20, 21).

3. Appareil de guidage de signaux haute fréquence selon la revendication 1 ou 2, **caractérisé en ce que**
un tapis amortissement (20, 21) est disposé sur un élément d'oscillateur (11) et/ou sur un module de convertisseur de fréquence (12) et/ou sur un élément de filtre (13) et/ou sur un coupleur directionnel (15) et/ou sur un élément de détecteur (16) et/ou sur un atténuateur d'amortissement (17).

4. Appareil de guidage de signaux haute fréquence selon la revendication 1 ou 2, **caractérisé en ce que**
le substrat (31) d'au moins un élément haute fréquence (11, 12, 13, 14, 15, 16, 17), sur lequel les conducteurs haute fréquence et les broches de contact (36) sont disposés, est entouré par un boîtier métallique (32) et le boîtier métallique (32) est au moins partiellement recouvert par un premier tapis d'amortissement (33).

5. Appareil de guidage de signaux haute fréquence selon la revendication 4, **caractérisé en ce que**
le premier tapis d'amortissement (33) présente des évidements (39), que traversent les broches de contact (36).

6. Appareil de guidage de signaux haute fréquence selon l'une des revendications 1 à 5, **caractérisé en ce que**
une carte de circuits imprimés (34) est reliée aux broches de contact (36) et la carte de circuits imprimés (34) ainsi que les tronçons conducteurs (38) des broches de contact (36) saillant éventuellement au-dessus de la carte de circuits imprimés (34) sont recouverts d'un second tapis d'amortissement absorbant (20).

7. Appareil de guidage de signaux haute fréquence selon la revendication 6, **caractérisé en ce que**
la carte de circuits imprimés (34) est disposée à l'extérieur du boîtier métallique (32).

8. Appareil de guidage de signaux haute fréquence selon la revendication 6 ou 7, **caractérisé en ce que**
la carte de circuits imprimés (34) contient un circuit logique pour commander les éléments haute fréquence.

9. Appareil de guidage de signaux haute fréquence selon la revendication 5, **caractérisé en ce que**
la carte de circuits imprimés (34) est entourée par un revêtement métallique (35) et des orifices (40) sont agencés dans le revêtement métallique (35) décalées par rapport aux broches de contact (36).

10. Appareil de guidage de signaux haute fréquence selon les revendications 1 à 9, **caractérisé en ce que**
un orifice de connecteur coaxial (44) est entouré par un second tapis d'amortissement absorbant (21) dans le boîtier (32).
